# FASCICULE DE BREVET EUROPEEN

(11) **EP 2 846 938 B1**
(45) Date de publication et mention de la délivrance du brevet: **21.03.2018**
(21) Numéro de dépôt: 13721761.8
(22) Date de dépôt: 10.05.2013
(51) Int. Cl.: B03D 1/24, G21F 9/12, G21F 9/30, B09C 1/02, G21F 9/00

(54) **PROCÉDÉ DE DÉCONTAMINATION RADIOACTIVE D'UNE TERRE PAR MOUSSE DE FLOTTATION À AIR DISPERSÉ ET LADITE MOUSSE**
VERFAHREN ZUR RADIOAKTIVEN DEKONTAMINIERUNG VON ERDBÖDEN DURCH EINEN FLOTATIONSSCHAUMSTOFF MIT DISPERGIERTER LUFT SOWIE ENTSPRECHENDER SCHAUMSTOFF
METHOD FOR THE RADIOACTIVE DECONTAMINATION OF SOIL BY DISPERSED AIR FLOTATION FOAM AND SAID FOAM

(30) Priorité: 11.05.2012 FR 1254352; 13.07.2012 JP 2012158124
(43) Date de publication de la demande: 18.03.2015
(73) Titulaire: Commissariat à l'Énergie Atomique et aux Énergies Alternatives, 75015 Paris (FR)
(72) Inventeur: FAURE, Sylvain, F-84210 Venasque (FR); MESSALIER, Marc, F-30200 Saint Michel D'Euzet (FR)
(74) Mandataire: Brevalex
(86) Numéro de dépôt international: PCT/EP2013/059708
(87) Numéro de publication internationale: WO 2013/167728

(56) Documents cités:
- EP-A1- 0 041 728
- JP-A- 2002 248 459
- US-A- 5 303 871

## Description

### DOMAINE TECHNIQUE

L'invention appartient au domaine de la dépollution, de la désinfection, de la purification, de la remédiation et/ou de la décontamination des sols.

En effet, la présente invention propose un nouveau procédé de décontamination, notamment de décontamination radioactive des sols et, en particulier, de décontamination radioactive des terres fortement contaminées par le césium 137Cs, ledit procédé mettant en oeuvre des mousses de flottation ou mousses flottantes utilisées en colonne à air dispersé.

La présente invention concerne également ladite mousse de flottation.

### ÉTAT DE LA TECHNIQUE ANTÉRIEURE

D'après le Code de la Santé Publique, est considérée comme substance radioactive « toute substance qui contient un ou plusieurs radionucléides dont l'activité ou la concentration ne peut être négligée du point de vue de la radioprotection ». Les radionucléides les plus susceptibles d'être rencontrés dans un contexte de sol pollué par des substances radioactives sont plus précisément les radionucléides suivants **[1]** :
- tritium ³H ;
- carbone ¹⁴C ;
- strontium ⁹⁰Sr avec son descendant (⁹⁰Y);
- césium ¹³⁷Cs avec son descendant (¹³⁷mBa);
- américium ²⁴¹Am;
- les radionucléides de la famille du thorium 232 : ²³²Th, ²²⁸Ra, ²²⁸Ac, ²²⁸Th, ²²⁴Ra, ²²⁰Rn, ²¹⁶Po, ²¹²Pb, ²¹²Bi, ²⁰⁸Tl et ²¹²Po ; et
- les radionucléides de la famille de l'uranium 238 et en particulier le radium ²²⁶Ra, ²²²Rn, ²¹⁸Po, ²¹⁴Pb, ²¹⁴Bi, ²¹⁴Po, ²¹⁰Pb, ²¹⁰Bi et ²¹⁰Po.

Le sol est un système complexe du point de vue physique et chimique, mélange de matières minérales et organiques. Outre les cailloux et les graviers de tailles supérieures à 2 mm, la fraction minérale, principalement des silicates ou des carbonates, représente une fraction inférieure à 2 mm, issue des produits de la dégradation physique puis chimique de la roche mère et que l'on peut classer par diamètres décroissants : les sables, les limons et l'argile dit granulométrique ou colloïdale constituée de fines particules chargées négativement présentant typiquement un diamètre inférieur à 100 µm. La fraction organique provient quant à elle de la matière organique vivante, animale, végétale, fongique et microbienne, qui englobe la totalité de la biomasse en activité, les débris d'origine végétale (résidus végétaux, exsudats), animale (déjections, cadavres), fongique et microbienne (cadavres, exsudats) appelés « matière organique fraîche » ; les composés organiques intermédiaires, appelés « matière organique transitoire » issue de l'évolution de la matière organique fraîche ; et des composés organiques stabilisés, les matières humiques ou humus, provenant de l'évolution des matières précédentes.

La contamination des sols par des substances radioactives peut résulter le plus souvent d'activités industrielles, médicales ou de recherche impliquant ces substances.

Mais la contamination peut malheureusement résulter d'incidents ou accidents connus tels que, par exemple, déversement accidentel ou incendie, ayant conduit à la libération non contrôlée et en grandes quantités de polluants dans l'environnement. Tels ont été les cas des accidents de Tchernobyl et plus récemment, celui de Fukushima.

En France, les dispositions relatives à la protection des populations contre le danger des rayonnements ionisants sont fixées par le Code de Santé Publique. Celui-ci fixe à 1 mSv/an, la limite maximale des expositions que peut recevoir l'homme du fait des activités nucléaires. Dès lors qu'un sol radiocontaminé peut engendrer une dose reçue supérieure pour une population à proximité, il est nécessaire d'appliquer une technique ou un procédé de décontamination ou remédiation du sol pour ramener la radioactivité à un seuil acceptable pour la population.

Que ce soit en situation industrielle ou en situation accidentelle, en préalable à la décontamination d'un sol radiocontaminé, les formes de la contamination radiologique et les sources à l'origine de cette contamination doivent être recherchées et caractérisées. Ce travail doit reposer sur des données historiques (activités pratiquées...), complétées par les données issues des mesures réalisées sur le terrain. Les radionucléides présents dans le sol doivent être identifiés, quantifiés et localisés.

A ces travaux, s'ajoute la nécessité de disposer de techniques ou procédés de remédiation des sols, efficaces et déployables sur le terrain.

En effet, à la suite d'un épisode ou de plusieurs épisodes successifs de rejets radioactifs atmosphériques, une partie des radionucléides dispersés dans l'air se dépose sur les surfaces au sol, entraînant une contamination surfacique des végétaux, de la terre et des milieux bâtis, ainsi qu'une contamination des eaux superficielles. Les dépôts radioactifs ainsi formés sont plus ou moins persistants dans l'environnement. Ils peuvent être caractérisés soit par la mesure de l'activité surfacique (en Bq/m²) des radionucléides constituant ces dépôts, soit par la mesure de l'activité massique dans la terre (en Bq/kg, permettant d'évaluer le risque de contamination des végétaux par transfert de radionucléides par les racines), soit enfin par la mesure du débit de dose ambiant (en µSv/h) dû aux rayonnements gamma émis par ces dépôts.

Les techniques de décontamination des sols utilisées jusqu'à présent peuvent être classées en trois catégories : hors-site, sur-site et *in-situ.* La plupart de ces techniques nécessite, en général, l'excavation de la terre à traiter.

Historiquement, la première méthode employée consiste en la méthode hors-site de décontamination par remplacement. Dans cette méthode, on décape le sol contaminé sur toute l'épaisseur polluée. On remplace la terre enlevée par de la terre saine prélevée ailleurs. Outre les coûts de transport que cette méthode induit, les coûts liés au retraitement ou au stockage de la terre contaminée sont proportionnels au volume déplacé, qui dépend directement de la surface et de la profondeur de la zone polluée. À noter que la terre souillée est considérée comme un déchet industriel à partir du moment où elle est déplacée.

L'injection dans le terrain d'un liquide ou d'un gaz sous pression susceptible de dissoudre le (ou les) polluant(s) peut être utilisée, lorsque ces derniers sont connus. Cette méthode correspond à la dépollution physico-chimique. On peut alors retraiter sur place, de manière progressive, les terres souillées. Ceci suppose une installation industrielle temporaire de retraitement pour :
- l'extraction de la terre à traiter, cette étape pouvant être toutefois optionnelle ;
- le processus de percolation ou d'injection de gaz ;
- la récupération des lixiviats et leur retraitement ;
- la remise en place de la terre traitée, lorsqu'elle a été excavée.

La méthode de décontamination par extraction par aspiration est adaptée aux terrains sableux et peu chère, pour les polluants volatils et semi-volatils tels que, par exemple, les hydrocarbures. Dans cette méthode, le terrain est mis en dépression par une pompe à vide, les vapeurs sont traitées par oxydation catalytique, condensation par réfrigération ou adsorption par du charbon actif. L'installation de traitement est mobile pour parcourir le site.

Lors de l'application de la méthode dite de « venting » ou d'extraction par injection, on injecte sous pression de l'air, de l'azote ou de la vapeur. Ce traitement est adapté aux terrains perméables à l'air, pour des solvants volatils, comme par exemple les solvants chlorés. Des puits permettent l'injection et la récupération des vapeurs, retraitées comme lors de l'aspiration. Le sol peut en outre être chauffé (par micro-ondes) pour améliorer l'efficacité de la technique.

La méthode d'extraction électrique est adaptée principalement aux polluants ionisés comme les métaux lourds et certains ions organiques. La nature du terrain est peu importante pourvu que sa conductivité soit bonne, notamment grâce à la présence d'eau. Des électrodes poreuses sont implantées de manière à générer un courant électrique dans le sol qui fait migrer les ions vers les électrodes de charge opposée. La récupération des polluants peut, par exemple, se faire par pompage.

Différentes variantes de méthodes de décontamination par lavage du sol existent : le lavage peut être fait à haute pression, à pression normale, sur site ou hors site. L'objectif est de séparer les particules les plus fines dans lesquelles sont principalement concentrés les polluants (lavage haute pression à l'eau), ou de capturer ces polluants dans une solution liquide telle que de l'eau ou un acide. Dans le premier cas, la terre doit être excavée, les déchets récupérés seront stockés sous forme de galettes, alors que, dans le deuxième cas, le traitement peut s'effectuer sans extraction si le terrain est perméable. Par exemple, la plupart des métaux lourds comme cuivre, zinc, arsenic, cadmium et plomb peuvent être extraits en utilisant une solution d'acide qu'il faut ensuite neutraliser afin de précipiter une partie des composés, puis décanter, filtrer et centrifuger, afin de séparer les éléments restants. Le lavage *in-situ* à haute pression reste cependant limité dans son application à des zones de faible taille, la pression de l'eau diminuant rapidement avec la distance à la buse d'injection. Il existe également des techniques utilisant d'autres solvants tels qu'alcanes, alcools ou cétones et ce, pour dissoudre la plupart des polluants organiques et toxiques. Elles sont peu chères et se basent sur l'injection du solvant, suivi de son extraction par une des techniques décrites plus haut.

Depuis les années 1990, ont été mis en oeuvre des procédés de dépollution impliquant des traitements biologiques et basés sur la capacité de certains êtres vivants à filtrer et accumuler les éléments toxiques dans leur organisme ou à s'en servir comme aliment. De tels procédés semblent pouvoir résoudre une partie des problèmes de coût soulevés par les modes classiques. Cependant, d'autres problèmes se posent, notamment en ce qui concerne le risque de prolifération des organismes utilisés, bien que les conditions à réunir sur site soient très précises pour qu'ils croissent normalement. Enfin, alors que les tests en laboratoire sont généralement concluants, la mise en oeuvre sur le terrain peut s'avérer décevante, par exemple, si les concentrations en polluants sont localement trop importantes, ou si la nature même du terrain comporte des aléas compromettant la croissance de ces organismes.

Certaines bactéries ont le pouvoir de dégrader des molécules complexes et d'en tirer ainsi l'énergie dont elles ont besoin pour vivre. On les a utilisées pendant des années pour traiter des sols pollués par des solvants chlorés. Mais on s'est aperçu que cette technique de traitement microbiologique par dégradation biologique *in situ* de certains polluants, éventuellement encouragée par la maîtrise de paramètres comme l'oxygénation, le degré d'hygrométrie et la température, peut générer des produits de dégradation ou métabolites plus toxiques et/ou plus mobiles que les produits initiaux. Ces métabolites ne sont pas les mêmes selon que les conditions de l'activité microbienne sont aérobies ou anaérobies. Afin de contrôler la production des métabolites les plus dangereux, on peut passer de l'un à l'autre des modes de biodégradation lorsque c'est opportun. Actuellement, des recherches portent sur la sélection d'espèces adaptées à la dégradation de chaque type de polluants. Ces recherches sont menées conjointement par des laboratoires de recherche et par des éco-industriels. Elles commencent à porter leurs fruits pour certains types d'hydrocarbures aromatiques polycycliques comportant plus de trois noyaux benzéniques, avec l'utilisation de certaines souches de champignons ayant la particularité d'attaquer les polluants par des enzymes extracellulaires.

De même, de nombreuses plantes sont capables de fixer, dans leurs cellules, les métaux lourds, radionucléides, composés organiques polluants et autres produits indésirables. En effet, certaines plantes produisent des enzymes qui dégradent ces polluants en des produits moins toxiques ou non-toxiques. Elles peuvent également être accompagnées d'une mycorrhizosphère se chargeant du travail de fixation et/ou de transformation, dont l'étude visant aux applications à l'échelle industrielle est en plein essor. Ces propriétés en ont fait des candidates d'avenir à la dépollution des sols. Les plantes sont aussi sélectionnées selon (i) leur taille et aptitude à faire plonger leurs racines profondément dans le sol, de manière à atteindre les couches polluées profondes notamment de l'ordre de quelques mètres, et selon (ii) le type de polluant qu'elles sont capables d'emprisonner. En pratique, on peut aussi excaver la terre et l'épandre sur une membrane imperméable sous serre, de manière à isoler la matière polluante et contrôler précisément les paramètres influant sur la croissance des plantes sélectionnées. Cela retire toutefois un des bénéfices majeurs de la phytoremédiation, à savoir son coût d'opération peu élevé. L'un des avantages de la phytoremédiation est la possible revalorisation des polluants recyclables, aussi appelée phytominage. Ainsi, les plantes dites hyperaccumulatrices, qui stockent le polluant dans leurs tiges et leurs feuilles peuvent être récoltées puis incinérées en vue de récupérer les métaux parmi les cendres et les réutiliser en métallurgie.

Dans le cas d'une contamination radioactive accidentelle de terres telle que celle survenue à Tchernobyl ou à Fukushima, peu de travaux bibliographiques détaillent la spéciation et la position d'une contamination récente i.e. une contamination survenue 1 an auparavant de la surface d'une terre plus ou moins riche en argiles et en complexes humiques, plus ou moins saline, et plus ou moins acide ou basique. Typiquement, pour les rizières cultivées autour de Fukushima, on peut néanmoins avancer, sans entrer dans le détail, que le césium 137 se trouve, un an après l'accident, dans les 5 premiers centimètres sous 2 formes :
- une forme « physisorbée » en surface des particules et échangeable en surface par des ions **[2]** ; et
- une forme fixée i.e. « piégée » de manière quasi-irréversible à l'intérieur dans les espaces interfoliaires de particules d'argile humides (interactions ioniques fortes), complexés dans les substances humiques ou à l'intérieur de complexes hybrides argilo-humiques **[3].**

La fraction constituée des plus fines particules dont la taille est comprise entre 4 et 50 µm contient l'essentiel de la contamination Cs (>96%). En effet, des essais de lavage à l'eau de 100 g de terres contaminées de Fukushima ont été effectués fin 2011 au Japon. Après filtration ou sédimentation des plus grosses particules dont le diamètre moyen est supérieur à 100 µm, une suspension colloïdale trouble de fines particules a été obtenue et après séchage, 4 g de terres ont été obtenues contenant plus de 96% de la contamination Cs initiale. Les particules qui piègent le césium sont chargées négativement et sont donc hydrophiles.

Cela montre la nécessité de développer un procédé permettant d'extraire directement, des terres contaminées, les fines particules contenant la majorité de la contamination dans un volume ou une masse minimisées (2 à 15% du poids initial). La quantité de terres à traiter à Fukushima sur 300 km² avoisinerait les 30.10⁶ m³. Il est nécessaire de développer un procédé capable de traiter au moins 100 tonnes/h de terres humides. La microfiltration frontale discontinue semble écartée car le gâteau de filtration limiterait rapidement les débits de traitement. De simples bassins de décantation où la terre serait mise à décanter ne permettraient pas non plus de récupérer facilement les fines de décantation, par aspiration et utilisation de fortes quantités d'eau.

### EXPOSÉ DE L'INVENTION

Les travaux des inventeurs ont permis de mettre au point un procédé de traitement/décontamination des terres contaminées et notamment contaminées par du césium.

En effet, les inventeurs ont montré qu'il est possible de traiter des sols contaminés par des radionucléides en utilisant des mousses de flottation ou mousses flottantes mises en oeuvre en colonne à air dispersé.

La flottation à air est un procédé de séparation permettant d'extraire des ions (flottation ionique) ou des particules solides (flottation particulaire). Elle est notamment utilisée à l'échelle industrielle pour le traitement des minerais et le désencrage du papier avec des débits de traitement de plusieurs centaines de m³ par heure (20 m³/min). Quelques travaux sont mentionnés pour le traitement de sols contaminés par des métaux lourds ou par des huiles. Ainsi, la demande de brevet JP 2002 248459 **[4]** propose une flottation classique d'ions (métaux lourds) contenus dans les sols par précipitation grâce à des complexants (ou « scavengers »). Ces derniers sont notamment des composés à base de soufre ou de phosphate qui peuvent présenter une certaine dangerosité. De même, le brevet US 5,303,871 **[5]** décrit une flottation de contaminants naturellement hydrophobes (huile ou graisse comprenant du pentachlorophénol) qui peuvent être flottés naturellement, un agent moussant pouvant être ajouté pour stabiliser la mousse.

Les inventeurs ont maintenant montré que la flottation à air peut être utilisée pour éliminer des contaminants radionucléiques présents dans les sols sous une forme piégée dans des particules à l'intérieur dans les espaces interfoliaires de particules d'argile humides, complexés dans les substances humiques ou à l'intérieur de complexes hybrides argilo-humiques i.e. contaminants radionucléiques piégés dans des particules hydrophiles, alors même que l'homme du métier aurait été dissuadé d'utiliser une technique de flottation sur des structures hydrophiles non flottables.

La flottation des terres par mousses est un procédé innovant de décontamination radioactive des terres et notamment de décontamination des terres en césium. L'avantage crucial de la technique de flottation est qu'elle intègre directement un système de lavage de sol : la terre est mise en suspension dans l'eau à une concentration variable. On rajoute, à cette suspension, des agents tensioactifs collecteurs et éventuellement des agents moussants en faibles quantités. Les bulles d'air injectées dans le mélange « transportent » les particules contenant les colloïdes contaminés par affinité de taille et d'hydrophobie. L'association particules hydrophiles contenant ou piégeant les contaminants radionucléiques + agent collecteur forme des particules solides hydrophobes que l'on peut faire flotter sans aucune libération des contaminants radionucléiques. Le procédé s'opère dans des colonnes de flottation et les contaminants particulaires sont récupérés dans un concentrât d'écumes que l'on peut facilement traiter par la suite par débordement ou aspiration.

Les mousses de flottation de l'invention permettent de traiter de grandes quantités de terres humides aux débits de traitements industriels de plusieurs centaines de tonnes par heure. Deux scénarii sont possibles :
- les terres seront excavées et traitées dans une unité de flottation dédiée ;
- une unité mobile de flottation capable de pomper et traiter directement *in situ* les boues des lagunes ou des rizières afin de limiter les opérations lourdes d'excavation,

les terres non flottées étant recyclées.

Fait intéressant, le procédé de traitement selon la présente invention s'applique, de façon générale, à tout radionucléide et notamment à tout radionucléide piégé, dans le sol, dans les espaces interfoliaires de particules d'argile humides (interactions ioniques fortes), complexé dans les substances humiques et/ou à l'intérieur de complexes hybrides argilo-humiques.

Ainsi, la présente invention concerne un procédé pour traiter une terre contaminée par au moins un radionucléide comprenant au moins une étape de séparation dudit radionucléide par mousse de flottation à air dispersé. Plus particulièrement, la présente invention concerne un procédé pour traiter une terre contaminée par au moins un radionucléide comprenant au moins une étape de séparation dudit radionucléide par mousse de flottation à air dispersé produite en injectant des bulles d'air dans une suspension comprenant ladite terre et au moins un collecteur.

Par « procédé pour traiter une terre contaminée », on entend, dans le cadre de la présente invention, aussi bien le fait de diminuer la quantité de radionucléides dans le sol que l'élimination complète desdits radionucléides dans ledit sol. Le fait de diminuer la quantité de radionucléides présents dans le sol consiste à produire une terre dont la charge en au moins un radionucléide après mise en oeuvre du procédé selon l'invention est inférieure à la charge initiale en ledit radionucléide de la terre i.e. avant mise en oeuvre du procédé selon l'invention. Par « charge inférieure », on entend une charge au moins inférieure à 50%, notamment au moins inférieure à 70%, en particulier au moins inférieure à 90% et, plus particulièrement, au moins inférieure à 95%.

La charge en radionucléides peut être exprimée par la mesure de l'activité surfacique (en Bq/m² de terre contaminée ou traitée), par la mesure de l'activité massique dans la terre (en Bq/kg de terre contaminée ou traitée), ou enfin par la mesure du débit de dose ambiant (en µSv/h) dû aux rayonnements gamma émis par la terre contaminée ou traitée. Avantageusement, la charge en radionucléides est caractérisée par la mesure de l'activité massique dans la terre exprimée en Bq/kg de terre contaminée ou traitée.

Par « par mousse de flottation à air dispersé », on entend un procédé consistant à insuffler, au sein d'une masse liquide obtenue à partir de la terre contaminée par au moins un radionucléide, des bulles d'air présentant un diamètre pouvant aller de quelques micromètres à quelques millimètres.

Par « terre contaminée », on entend une terre comprenant au moins un radionucléide qui n'existe pas à l'état naturel ou qui est présent en une quantité supérieure à la quantité habituelle dans ladite terre. Cette contamination peut être le résultat d'activités industrielles, médicales ou de recherche utilisant ledit radionucléide ou d'incidents ou d'accidents, tels que déversement accidentel ou incendie avec retombées radioactives, libérant ledit radionucléide. La terre contaminée à traiter conformément au procédé selon l'invention peut être une terre cultivée, une terre cultivable, une terre obtenue sur un site industriel ou une terre obtenue sur un site urbain.

Comme déjà expliqué, le radionucléide à éliminer dans la terre contaminée peut être tout radionucléide piégé, dans le sol, dans les espaces interfoliaires de particules d'argile humides, complexé dans les substances humiques et/ou à l'intérieur de complexes hybrides argilo-humiques.

Avantageusement, ledit radionucléique est choisi dans le groupe constitué par le tritium ³H ; le carbone ¹⁴C ; le strontium ⁹⁰Sr ; l'yttrium ⁹⁰Y ; le césium ¹³⁷Cs ; le baryum ^{137m}Ba ; l'américium ²⁴¹Am ; un radionucléide de la famille du thorium 232 ou un radionucléide de la famille de l'uranium 238.

En particulier, ledit radionucléique est choisi dans le groupe constitué par ³H, ¹⁴C, ⁹⁰Sr, ⁹⁰Y, ¹³⁷Cs, ^{137m}Ba, ²⁴¹Am, ²³²Th, ²²⁸Ra ²²⁸Ac, ²²⁸Th, ²²⁴Ra, ²²⁰Rn, ²¹⁶Po, ²¹²Pb, ²¹²Bi, ²⁰⁸Tl, ²¹²Po, ²²⁶Ra, ²²²Rn, ²¹⁸Po ²¹⁴Pb, ²¹⁴Bi, ²¹⁴Po, ²¹⁰Pb, ²¹⁰Bi et ²¹⁰Po.

Tout particulièrement, le radionucléide à éliminer dans la terre contaminée conformément au procédé de l'invention est le césium ¹³⁷Cs.

Le procédé de traitement et de décontamination selon la présente invention peut être soit un procédé discontinu également désigné « procédé batch » avec un approvisionnement discontinu de terres à traiter, soit un procédé continu.

Avantageusement, le procédé selon la présente invention comprend les étapes consistant à :
a) injecter des bulles d'air dans une suspension comprenant ladite terre et au moins un collecteur, moyennant quoi une mousse est produite ;
b) séparer au moins une partie de ladite mousse du reste de la suspension.

Le procédé selon la présente invention peut être mis en oeuvre dans tout système connu de l'homme du métier et habituellement utilisé pour un procédé de flottation tel qu'une colonne de flottation ou une cellule de flottation. Par définition, une cellule de flottation est un réacteur muni d'agitateurs aérés, alors qu'une colonne de flottation présente des injecteurs d'air. Avantageusement, le procédé selon la présente invention est mis en oeuvre sur une colonne (ou une cellule) de flottation présentant une hauteur comprise entre 1 m et 8 m.

La suspension mise en oeuvre dans l'étape (a) comprend donc la terre à traiter, au moins un collecteur et de l'eau. Avantageusement, cette suspension comprend :
- de 2 à 40% en poids et notamment de 10 à 30% en poids de terre à traiter par rapport au poids total de la suspension ;
- de 0,005 à 5% en poids et notamment de 0,01 à 2% en poids d'au moins un collecteur par rapport au poids total de la suspension ; et
- de l'eau.

Cette suspension est également connue sous l'appellation « pulpe » dans le domaine de la flottation.

Par « collecteur », on entend, dans le cadre de la présente invention, un agent tensioactif présentant au moins une chaîne hydrocarbonée et une tête polaire, qui, de fait, se place à l'interface air-eau des bulles d'air injectées dans la pulpe. Un collecteur est apte à provoquer l'adhésion entre les particules solides flottables de la suspension et les bulles d'air. Plus particulièrement, le collecteur est apte à rendre plus hydrophobes les particules solides, leur conférant plus d'affinité vis-à-vis de la phase gazeuse que de la phase aqueuse, lesdites particules devenant ainsi flottables. Un collecteur peut également être capable d'agglomérer les particules solides flottables entre elles.

Par « particules solides flottables », on entend des particules solides issues de la terre à traiter, de nature minérale, organique ou organominérale, dont le diamètre, notamment mesuré avec un appareil FPIA tel que le Sysmex FPIA-3000, est inférieur à 150 µm, notamment inférieur à 100 µm, et, tout particulièrement, inférieur à 50 µm, rendues flottables grâce au collecteur. De telles particules piègent le (ou les) radionucléide(s) à éliminer. Ainsi, les bulles d'air formées dans le procédé selon l'invention sont entourées par de telles particules solides flottables.

Dans le cadre de la présente invention, le collecteur mis en oeuvre peut éventuellement présenter une activité moussante. En variante, il ne présente aucune activité moussante.

Dans le cadre de la présente invention, le collecteur mis en oeuvre est avantageusement choisi parmi un acide gras, un sel d'acide gras et un agent tensioactif cationique.

Un acide gras est un acide alkylcarboxylique, également connu sous l'appellation « savon » ou « savon d'acide gras », de formule R₁COOH avec R₁ représentant une chaîne alkyle, linéaire, cyclique ou ramifiée, comprenant de 3 à 50 atomes de carbone et notamment de 5 à 30 atomes de carbone. Un sel d'acide gras est un alkylcarboxylate, également connu sous l'appellation « sel de savon » ou « sel de savon d'acide gras », de formule R₂COOX avec R₂ représentant une chaîne alkyle, linéaire, cyclique ou ramifiée, comprenant de 3 à 50 atomes de carbone et notamment de 5 à 30 atomes de carbone et X représentant un métal et notamment un métal choisi dans le groupe constitué par le calcium, le sodium et le potassium. Avantageusement, la suspension mise en oeuvre lors de l'étape (a) du procédé selon la présente invention est un sel d'acide gras et notamment l'oléate de sodium.

Par « agent tensioactif cationique », on entend un tensioactif présentant au moins une chaîne hydrocarbonée et une tête polaire, la partie hydrophile dudit agent étant chargée positivement. Un agent tensioactif cationique est avantageusement choisi parmi les ammoniums quaternaires comportant au moins une chaîne aliphatique en C₄-C₂₂ associés à un contre-ion anionique choisi notamment parmi les dérivés du bore tels que le tétrafluoroborate ou les ions halogénures tels que F-, Br-, I- ou Cl-. A titre d'agents tensioactifs cationiques utilisables, on peut citer le chlorure tétrabutylammonium, le chlorure tétradécylammonium, le bromure de tétradécyltriméthyle ammonium (TTAB), les halogénures d'alkylpyridinium portant une chaîne aliphatique et les halogénures d'alkylammonium. Plus particulièrement, l'agent tensioactif cationique utilisable dans le cadre de la présente invention est le TTAB.

La suspension telle que mise en oeuvre dans le cadre du procédé selon l'invention peut comprendre un seul collecteur ou un mélange d'au moins deux collecteurs différents, appartenant à un même type de collecteur. En d'autres termes, lesdits au moins deux collecteurs sont choisis soit parmi les acides gras et leurs sels soit parmi les agents tensioactifs cationiques. En variante, lesdits au moins deux collecteurs appartiennent à deux types de collecteurs différents. Lorsque la suspension mise en oeuvre dans le cadre du procédé selon l'invention comprend un mélange d'au moins deux collecteurs différents, la quantité totale de collecteurs en poids est de 0,005 à 5% en poids et notamment de 0,01 à 2% par rapport au poids total de la suspension.

Dans le cadre de la présente invention, l'eau utilisée pour préparer une suspension comprenant de 2 à 40% en poids et notamment de 10 à 30% en poids de terre à traiter peut être n'importe quel type d'eau. Avantageusement, cette eau est choisie dans le groupe constitué par l'eau osmosée, l'eau distillée, l'eau de mer, l'eau de source, l'eau de rivière, l'eau de lagune, l'eau de rizière, l'eau industrielle, l'eau du réseau d'eau potable ou un de leurs mélanges. Plus particulièrement, cette eau est de l'eau industrielle ou de l'eau du réseau d'eau potable. Il convient de noter que, dans la suspension mise en oeuvre lors de l'étape (a) du procédé selon l'invention, cette eau se trouve mélangée avec l'eau que peut contenir la terre à traiter.

La suspension telle que mise en oeuvre dans le cadre de la présente invention peut comprendre en plus du collecteur au moins un autre élément et notamment au moins un autre tensioactif. Avantageusement, la présente invention envisage d'ajouter, au collecteur présent dans la suspension mise en oeuvre lors de l'étape (a), tel que précédemment défini, au moins un agent tensioactif moussant. Dans un mode de réalisation particulier de l'invention, au moins un agent tensioactif moussant est ajouté à au moins un collecteur de type acide gras ou sel d'acide gras.

L'agent tensioactif moussant mis en oeuvre dans le cadre de la présente invention peut être un agent tensioactif moussant non ionique (ou neutre) ou amphotère.

Par « agent tensioactif non ionique (ou neutre), on entend un composé dont les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène. En raison de la faible contribution hydrophile de ces fonctions, les composés tensioactifs non ioniques sont le plus souvent polyfonctionnels. L'agent tensioactif non ionique moussant est notamment choisi dans la famille des alkylpolyglucosides (APG) ou alkylpolyétherglucosides (APEG) ou dans la famille des alcools éthoxylés. Les alkylpoly(éther)glucosides sont dérivés du glucose naturel, et, de préférence, biodégradables. A titre d'exemples de tels tensioactifs, on peut citer le tensioactif Oramix CG-110 (marque de commerce) commercialisé par la société SEPPIC, le Glucopon 215 (marque de commerce) commercialisé par la société COGNIS.

Par « agent tensioactif amphotère », on entend un composé se comportant à la fois comme un acide ou comme une base selon le milieu dans lequel il est placé. L'agent tensioactif amphotère moussant est notamment choisi dans la famille des sulfobétaïnes ou alkylamidopropylhydroxysulfobétaïnes comme l'Amonyl 675 SB (marque de commerce) commercialisé par SEPPIC ou dans la famille des amine-oxydes (ou oxydes d'amines), comme l'Aromox MCD-W (marque de commerce), cocodiméthylamine oxyde commercialisé par Akzo Nobel.

Avantageusement, la suspension mise en oeuvre dans le cadre de l'étape (a) du procédé selon l'invention peut comprendre, en plus du collecteur tel que précédemment défini, au moins un agent tensioactif moussant choisi parmi les polyalkylglucosides, les sulfobétaïnes, les alcools éthoxylés et les oxydes d'amines.

Lorsque la suspension comprend au moins un agent tensioactif moussant en plus du collecteur, elle peut contenir un seul agent tensioactif moussant ou plusieurs agents tensioactifs moussants différents, tel(s) que précédemment défini(s). Dans la suspension mise en oeuvre lors de l'étape (a) du procédé selon l'invention, le (ou les) agent(s) tensioactif(s) moussant(s) est(sont) présent(s) en une quantité totale de 0,005 à 1% en poids et notamment de 0,01 à 0,5% par rapport au poids total de la suspension.

La suspension mise en oeuvre lors de l'étape (a) du procédé selon la présente invention peut être préparée de différentes façons, notamment en fonction de la nature de la terre à traiter, du (ou des) collecteur(s) utilisé(s) et du (ou des) agent(s) tensioactif(s) moussant(s) éventuellement utilisé(s).

Dans un 1^{er} mode de réalisation, la terre contaminée par au moins un radionucléide est excavée. Une fois excavée, elle est introduite dans la colonne (ou la cellule) de flottation et mise en contact avec l'eau déjà présente, introduite simultanément ou introduite après, de façon à obtenir une suspension comprenant de 2 à 40% en poids et notamment de 10 à 30% en poids de terre à traiter par rapport au poids total de ladite suspension.

Dans un 2^{nd} mode de réalisation, la terre contaminée est pompée. Ce mode de réalisation est particulièrement adapté au cas où la terre à traiter est riche en eau et notamment dans le cas d'une terre à traiter issue d'une rizière ou d'une lagune naturelle dans laquelle la terre à traiter a été rassemblée. La terre à traiter est directement pompée notamment à une concentration de 20 à 50% en terre par rapport au poids de la matière pompée, avant d'être introduite dans la colonne (ou la cellule) de flottation et mise en contact avec l'eau déjà présente, introduite simultanément ou introduite après, de façon à obtenir une suspension comprenant de 2 à 40% en poids et notamment de 10 à 30% en poids de terre à traiter par rapport au poids total de ladite suspension.

Que la terre à traiter soit excavée ou pompée, c'est la couche superficielle du sol qui est récupérée. Avantageusement, cette couche superficielle représente les 15 1^{ers} centimètres, notamment les 10 1^{ers} centimètres et, en particulier, les 5 1^{ers} centimètres de sol à partir de la surface.

De plus, que la terre contaminée à traiter soit excavée ou pompée et pour un procédé de traitement selon l'invention en continu, le débit d'introduction de la suspension de terre à traiter est compris entre 1 et 2000 m³/h selon le dimensionnement de la colonne (ou de la cellule) de flottation.

Enfin, que la terre contaminée à traiter soit excavée ou pompée, elle peut être soumise à une étape préalable de traitement de façon à en éliminer les composants minéraux et/ou organiques, tels que cailloux, graviers et particules, présentant un diamètre supérieur à 300 µm. Un tel pré-traitement peut être un hydrocyclonage ou un tamisage.

Lorsque la suspension mise en oeuvre lors de l'étape (a) du procédé selon l'invention ne comprend qu'un collecteur tel que précédemment défini, ce dernier peut être introduit dans la suspension une fois la terre à traiter mélangée avec l'eau, ou être mis dans l'eau préalablement à son mélange avec la terre à traiter. Dans le cas où le collecteur est introduit dans la suspension une fois la terre à traiter mélangée avec l'eau, cette introduction peut être réalisée avant ou simultanément à l'injection des bulles d'air.

Lorsque la suspension mise en oeuvre lors de l'étape (a) du procédé selon l'invention comprend au moins deux collecteurs ou au moins un collecteur et au moins un agent tensioactif moussant, ces différents composants peuvent être introduits dans la suspension, simultanément, par groupe ou les uns après les autres. Comme précédemment envisagé, chacun de ces composants peut être introduit dans la suspension une fois la terre à traiter mélangée avec l'eau, ou être mis dans l'eau préalablement à son mélange avec la terre à traiter. Dans le cas où ce composant est introduit dans la suspension une fois la terre à traiter mélangée avec l'eau, cette introduction peut être réalisée avant ou simultanément à l'injection des bulles d'air. Il est également possible d'envisager d'introduire un 1^{er} composant dans la suspension, puis d'injecter dans cette dernière des bulles d'air, d'arrêter cette injection de façon à introduire un 2^{nd} composant puis d'injecter à nouveau des bulles d'air.

Dans le cadre de la présente invention, le diamètre moyen des bulles d'air injectées ou insufflées lors de l'étape (a) est avantageusement compris entre 100 µm et 6 mm, en particulier, entre 200 µm et 4 mm et, tout particulièrement, entre 1 et 2 mm.

Typiquement, la vitesse ascensionnelle des bulles d'air injectées lors de l'étape (a) est comprise entre 5 et 80 cm.s⁻¹, notamment entre 10 et 50 cm.s⁻¹ et, en particulier, de l'ordre de 20 cm.s⁻¹ i.e. 20 cm.s⁻¹ ± 5 cm.s⁻¹.

Lors de l'étape (a) du procédé selon la présente invention, les bulles d'air sont produites par introduction d'air dispersé mécaniquement par une turbine positionnée à la base de la cellule de flottation ou par buses d'injections à effet venturi.

Lorsque la colonne (ou la cellule) de flottation présente une hauteur comprise entre 1 m et 8 m, la hauteur de mousse produite lors de l'étape (a) est comprise entre 30 cm et 600 cm, notamment entre 80 cm et 400 cm.

Lors de l'étape (b) du procédé selon l'invention, la mousse enrichie en particules et donc enrichie en radionucléides au sommet de la colonne (ou de la cellule) est séparée du reste de la suspension par aspiration ou par débordement. Ainsi, le sommet de la colonne de flottation est avantageusement équipé d'un système de récupération des mousses par aspiration ou par débordement.

En effet, les particules de terres contaminées sont récupérées par flottation au sommet de la colonne dans un concentrât d'écume contenant moins de 5% d'eau, notamment moins de 4% d'eau et, en particulier, moins de 2% d'eau. Le concentrât ainsi récupéré peut être ou non lavé à l'eau pour éliminer les traces de collecteur(s) et éventuellement d'agent(s) tensioactif(s) moussant(s) et séché à l'air libre en vue d'un conditionnement de type déchet radioactif, ou directement conditionné dans du ciment. Suite à la mise en oeuvre du procédé selon l'invention, un facteur de concentration massique d'au moins 10, permettant d'atteindre des facteurs de décontamination de 10 à 200 peut être obtenu.

Le reste de la suspension exempte de radionucléide(s) peut être récupéré, éventuellement lavé à l'eau pour éliminer les traces de collecteur(s) et éventuellement d'agent(s) tensioactif(s) moussant(s) et éventuellement séché, préalablement à son recyclage et notamment sa redisposition en conditions naturelles. A cet effet, le bas de la colonne (ou de la cellule) de flottation est équipé d'une purge discontinue ou continue des sédimentations afin d'éliminer les terres (particules) les plus grosses à recycler, non flottées dont le diamètre est avantageusement supérieur à 50 µm et notamment compris entre 50 à 300 µm.

La présente invention concerne également la mousse de flottation obtenue, par mise en oeuvre du procédé selon la présente invention, à partir d'une suspension de terre comprenant :
- de 2 à 40% en poids et notamment de 10 à 30% en poids de terre à traiter par rapport au poids total de la suspension ;
- de 0,005 à 5% en poids et notamment de 0,01 à 2% en poids d'au moins un collecteur par rapport au poids total de la suspension ; et
- de l'eau.

Tout ce qui a été précédemment précisé quant aux éléments compris dans la suspension mise en oeuvre et notamment la présence éventuelle d'au moins un agent tensioactif moussant, en plus du collecteur et quant aux caractéristiques et propriétés de la mousse s'applique également à la mousse de flottation selon l'invention.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 est une schématisation du principe de la flottation en colonne à l'échelle laboratoire.
La Figure 2 présente la distribution de taille des particules pour l'échantillon A (Figures 2A et 2B), échantillon B (Figures 2C et 2D) et échantillon C (Figures 2E et 2F) avec pondération de la distribution en nombre (Figures 2A, 2C et 2E) et pondération de la distribution en surface (Figures 2B, 2D et 2F).
La Figure 3 présente l'effet de l'ajout d'oléate sur la distribution de taille des particules dans l'échantillon A (Figures 3C et 3D) par rapport à l'échantillon A sans oléate (Figures 3A et 3B), avec pondération de la distribution en nombre (Figures 3A et 3C) et pondération de la distribution en surface (Figures 3B et 3D).
La Figure 4 présente le potentiel Zêta d'une suspension à 20 g/L de terre de l'échantillon A ou de terre de l'échantillon C en fonction de la concentration en TTAB.

### EXPOSÉ DÉTAILLÉ DE MODES DE RÉALISATION PARTICULIERS

### I. Procédé selon l'invention en cellule batch.

Il s'agit de vérifier, à l'échelle du laboratoire, sur 440 g de terres à flotter, la flottabilité d'échantillons de terre, avec des caractéristiques différentes, en vue de la décontamination radioactive de sols contaminés.

### 1.1. Echantillons de terre.

Les échantillons de 3 terres différentes de Camargue (terre de rizière, ci-après désigné Echantillon A), de Marcoule (terre de romarin, ci-après désigné Echantillon B) et de Grenoble (terre maraîchère, ci-après désigné Echantillon C). Les échantillons A et B sont prélevés au niveau de la couche superficielle, alors que, pour l'échantillon C, le prélèvement se fait sur une épaisseur de plusieurs centimètres.

Les échantillons mis en oeuvre sont mis en suspension dans l'eau, après un pré-tamisage, sur tamis avec ouverture de maille de 2 mm, quand nécessaire. Il n'est pas nécessaire de procéder à un broyage manuel préalable.

Un disperseur de marque Lhomargy utilisé à une vitesse de rotation de 3000 tours/min pendant 5 min permet de préparer une suspension à 150 g/l de terres.

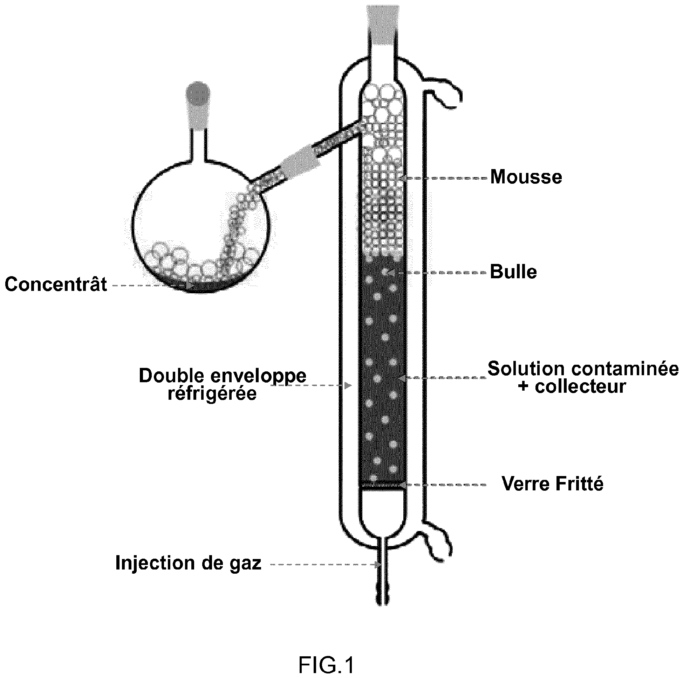

La Figure 1 présente une schématisation de la colonne de flottation mise en oeuvre lors du traitement de terres en laboratoire avec récupération du concentrât d'écume par débordement. Conformément au principe de la flottation, on ajoute un collecteur et on insuffle des bulles d'air dans la solution ou la suspension (terre dans l'eau) à traiter.

Les caractéristiques physico-chimiques des suspensions, susceptibles d'affecter la flottation (taille et charge de surface) ont été déterminées (Tableau 1 ci-après).

**Tableau 1 : Echantillons pour l'étude de flottation**

| | Ech. A | Ech. B | Ech. C |
|---|---|---|---|
| Matière sèche (%) | 84,2 | 85,8 | 70,5 |
| Matière organique (incinérée à 425°C) | 8,2 | 6,4 | 4,7 |
| Pré-traitement au tamis 2 mm | oui | oui | non |
| Mise en suspension avec Lhomargy | oui | oui | oui |
| Pré-traitement au tamis 180 µm particules > 180 µm | 31 | 49,8 | 15,8 |
| pH (suspension à 650 g/L) | 7,7 | 7,8 | 7,2 |
| Potentiel Zeta (mV) | -11,7 | -14,5 | -19,2 |
| Taille (µm) (moy arith) | 5 | 6,2 | 5,9 |
| Taille (µm) (moy pond surf) | 20,1 | 18,6 | 27,9 |

Les échantillons sélectionnés pour l'étude ont un taux de matière sèche variable entre 70 et 84%, avec un taux de matière organique, déterminé par incinération à 425°C d'environ 6% et un pH, après mise en suspension dans l'eau du réseau d'eau potable, autour de 7,5.

Ils présentent des caractéristiques très différentes en termes de taille de particules : l'échantillon C présente le taux le plus faible de grosses particules non-flottables (> 180 µm), suivi par l'échantillon A et l'échantillon B.

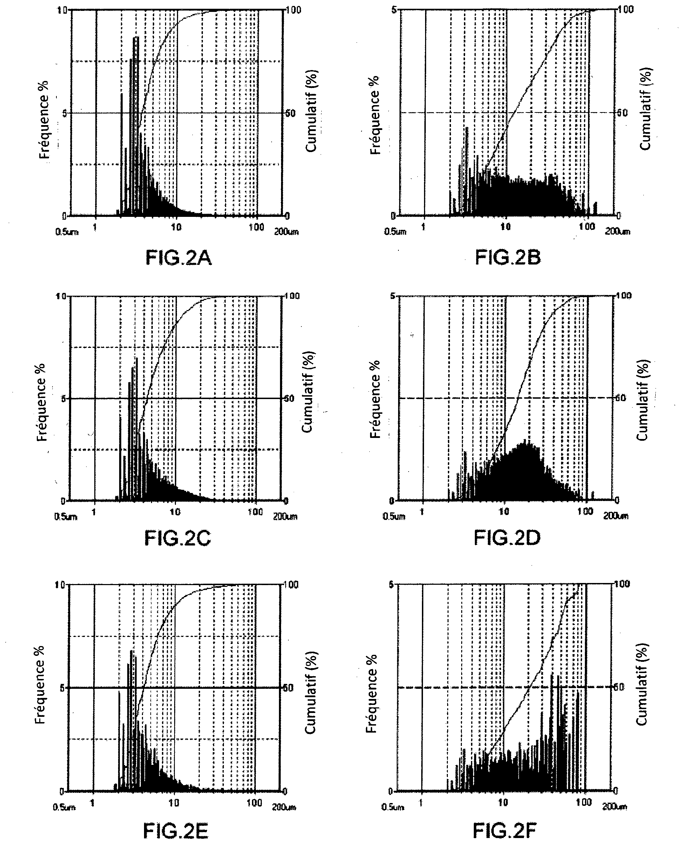

Pour la fraction dite « flottable » i.e. des particules < 180 µm, les tailles moyennes (diamètres) sont données à titre indicatif, les échantillons étant très hétérogènes, la distribution de taille de chaque échantillon pré-tamisé à 180 µm (mesuré avec un appareil FPIA tel que le Sysmex FPIA-3000) est montrée en Figure 2.

En ce qui concerne les mesures de potentiel zêta effectuées dans un milieu liquide avec conductivité de 300 µS/cm, les particules présentent une charge de surface légèrement négative : l'échantillon C est le plus anionique, suivi par l'échantillon B puis l'échantillon A.

### 1.2. Tests de flottation.

Les échantillons sélectionnés, mis en suspension avec la procédure retenue, présentent des caractéristiques qui les rendent *a priori* flottables.

En considérant les tailles moyennes et la charge de surface, l'utilisation d'un collecteur pour la flottation est préconisée : les tests sont effectués avec un collecteur traditionnel en désencrage (oléate de calcium) ou avec un tensioactif cationique spécifique.

Les flottations sont réalisées à l'aide d'une cellule à air dispersé Voith, en batch sur un volume de 22 L de suspension à 20 g/L à température ambiante. La durée a été variée et sera précisée dans la partie résultats.

L'air est introduit mécaniquement par une turbine positionnée à la base de la cellule de flottation, les mousses sont éliminées par débordement.

Les échantillons sont collectés avant le démarrage de la flottation (ech. EF = entrée flottation), à la fin du traitement (ech. PF = « pâte » flottée, i.e. ayant subi le traitement de flottation) et sur les mousses (M).

Les échantillons prélevés sont caractérisés avec les mêmes mesures que celles utilisées pour caractériser les échantillons de départ (matière sèche, matière organique, taille de particules, potentiel zêta). Le rendement de flottation est calculé à partir de la quantité de matière rejetée par rapport à la matière traitée.

Les additifs tensioactifs de flottation utilisés sont choisis parmi :
- l'oléate de sodium de formule C₁₇H₃₃-COONa, tensioactif anionique avec une balance hydrophile/hydrophobe (HLB) de 18 ;
- le Brij S-100 de formule C₁₈H₃₇-C(OCH₂CH₂)ₙOH avec n de l'ordre de 100, tensioactif non ionique avec une HLB de 18 ;
- le Glucopon® de formule H-(C₆H₁₀O₅)ₙ-O-CₓH_{2X+1} avec 6<x<8 et 1<n<5, tensioactif non ionique ;
- le bromure de tétradécyltriméthylammonium (TTAB) de formule CH₃(CH₂)₁₃N(Br)(CH₃)₃, tensioactif cationique.

### I.3. Résultats.

Les essais réalisés sont récapitulés dans le Tableau 2 ci-après.

**Tableau 2 : Flottations réalisées (* = Echantillon contaminé par CsCl)**

| Ech. | Descriptif | Pre-filtration | Réf |
|---|---|---|---|
| A | Brij à concentration croissante, suivi par addition oléate et à la fin addition de Glucopon® | 150 µm | 1 |
| A | Glucopon® 8 g/L suivi par addition d'oléate (mais | Non filtrée | 2 |
| | après prélèvement) | 180 µm | |
| A | Oléate 1% (15 min) + air (1 prélèvement) + 1 g | | 3 |
| | Glucopon® (2 min) + air (flottation 4 min PF1) + 1 g | | |
| | Glucopon® (flottation 5 min PF2) | | |
| B | Glucopon® (sans oléate), 2 min et puis flottation pdt 6 min | 180 µm | 4 |
| B | Oléate 1% (15 min) + air (1 prélèvement) + 1 g | 180 µm | 5 |
| | Glucopon® (2 min) + air (flottation 4 min PF1 + 1 g | | |
| | Glucopon® (flottation 5 min PF2) | | |
| | Oléate 1% (15 min) + 1 g Glucopon® + air (flottation 4 min PF1) (air tout de suite) + oléate | | |
| B | Oléate + Glucopon® après 15 min, flott pdt 5 min et après prélèv. (mousses) | 180 µm | 6 |
| B | | Non filtrée | 7 |
| C | Oléate + Glucopon® après 15 min, flott pdt 5 min, oléate + Glucopon® (même dose) et après prélèv.(mousses) | 180 µm | 8 |
| | Oléate 1% (15 min) + air (1 prélèvement) + 1 g | | |
| C | Glucopon® (2 min) + air (flott 4 min) + oléate 1% (15 min) + air (1 prélèvement) + 1 g Glucopon® (2 min) + air (flott 4 min) | Non filtrée | 9 |
| C | 0,7% TTAB | Non filtrée | 10 |
| B | 0,7% TTAB | Non filtrée | 11 |
| C* | 0,7% TTAB | Non filtrée | 12 |
| A* | 0,7% TTAB | Non filtrée | 13 |
| B* | 0,7% TTAB | Non filtrée | 14 |
| A* | 0,7% TTAB et terre à 114 g/L | Non filtrée | 15 |

Dans les essais réalisés, l'oléate de sodium est rajouté à 1% (pourcentage massique par rapport à la suspension de particules de terre à 20g/L), le Glucopon® 1 g d'une solution à 60% et le TTAB à 0,7% (pourcentage massique par rapport à la suspension de particules de terre à 20 g/L).

Le premier essai (Flottation Ref. 1) a montré que l'agent moussant sélectionné (Brij S-100) n'est pas suffisant pour former la mousse à éliminer par débordement. En revanche, l'addition d'oléate de sodium, qui précipite sous forme d'oléate de calcium avec les ions Ca²⁺ de l'eau, conduit à la formation d'une mousse stabilisée par des particules, qui s'élimine rapidement. Ensuite le système revient dans son état initial.

Dans le but d'augmenter la hauteur de mousse formée, un agent moussant efficace, le Glucopon® (alkylpolyglucoside) est utilisé : une mousse de plusieurs centimètres de hauteur est alors rapidement formée et peut être éliminée par débordement. Toutefois, cette mousse possède une fraction d'eau très importante, avec un drainage assez rapide et semble peu chargée en particules. Un essai supplémentaire (Flottation Ref. 2), en inversant l'ordre d'addition du moussant (Glucopon®) et du collecteur (oléate) est aussi réalisé, sans changement radical de comportement.

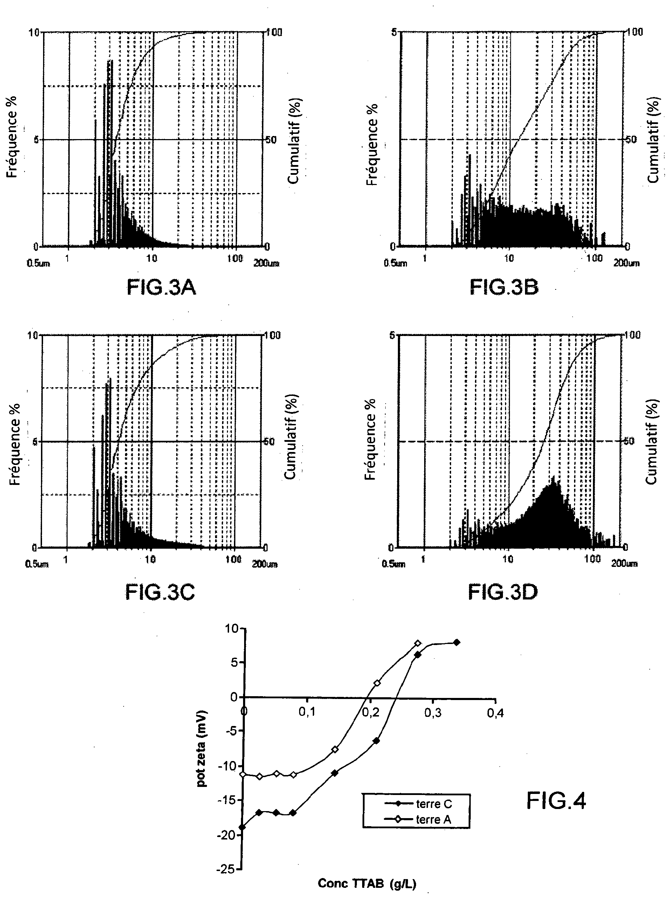

Les essais suivants sont donc réalisés en introduisant d'abord l'oléate et ensuite le Glucopon® et en prélevant après l'addition de chaque produit. Le premier effet constaté est que l'ajout d'oléate détermine une agglomération des particules, comme illustré dans la Figure 3. Cette tendance est aussi visible en analysant les valeurs moyennes (Tableau 3 ci-après).

**Tableau 3**

| Echantillon | Diamètre moy arith. (µm) | Diamètre moy pond surf. (µm) |
|---|---|---|
| A EF | 5,03 | 20,46 |
| A EF + 1% oléate | 6,63 | 31,97 |
| A PF (1% oléate) | 7,11 | 40,88 |

Cet effet collecteur est à l'origine de l'élimination de 3,8% des particules, qui se concentrent dans les mousses (100 g/L vs 14 g/L de la suspension initiale). En analysant la composition des mousses, il semblerait également que les substances organiques aient été éliminées de manière préférentielle (matière organique : 17% vs 8% dans la suspension initiale).

Le système semble donc très réactif vis-à-vis de l'introduction de l'oléate. Toutefois, la mousse formée est éliminée rapidement et ensuite il n'est plus possible d'éliminer davantage de matière, sans introduire l'agent moussant Glucopon®.

Lors de l'ajout du Glucopon®, ce dernier forme une mousse assez fine, surmontée par une mousse à particules telle que celle formée en présence d'oléate. Cet effet est donc à l'origine de la flottation d'une quantité de matière supplémentaire, jusqu'à ce que la mousse devienne progressivement de moins en moins chargée (en passant de 30 g/L à 9 g/L, soit environ la concentration initiale de la suspension). Ce phénomène s'explique probablement par l'effet dispersant du Glucopon® sur les particules, comme mis en évidence par les mesures de taille (Tableau 4 ci-après).

**Tableau 4**

| **Echantillon** | **Diamètre moy arith. (µm)** | **Diamètre moy pond surf. (µm)** |
|---|---|---|
| Terre romarin flot C PF avant glu | 6,43 | 38,3 |
| Terre romarin flot C PF après glu C2 | 4,39 | 7,89 |

Le rendement final i.e. la quantité de particules éliminées par flottation est de 10,2%.

Après avoir prélevé la mousse, alors que le système n'est plus moussant, un deuxième ajout de Glucopon® permet d'obtenir à nouveau une mousse fine, très humide, peu chargée en particules, qui ne sont donc pas éliminées de manière sélective mais par partage hydraulique.

L'effet dispersant du Glucopon® a été aussi vérifié par un essai (Flottation Ref. 4) sans oléate. Dans ce cas, l'élimination des particules est expliquée uniquement par le partage hydraulique (concentration de la mousse en g/L = concentration de la suspension initiale).

On peut donc conclure que l'addition d'oléate est nécessaire pour l'agglomération des particules et leur concentration dans les mousses stabilisées par ces mêmes particules. Il convient de rappeler que l'oléate de calcium très faiblement soluble ne présente pas de caractère moussant. De plus, comme ces mousses stabilisées s'épuisent rapidement, il peut être avantageux de combiner l'oléate avec un agent tensioactif moussant.

L'addition d'oléate et Glucopon® a été testée aussi avec l'échantillon de terre B (Flottation Ref. 5), l'agglomération du collecteur et l'effet du moussant ont été à nouveau observés, mais l'efficacité du traitement semble réduite avec ce type de terre (Tableau 5 ci-après).

**Tableau 5 : Concentrations des suspensions avant flottation (EF) ; après traitement de flottation (PF) et des mousses (M1, 1°prélèvement après addition de Glucopon® et M2, 2°prélèvements après la deuxième addition de Glucopon®)**

| Ech. | Conc. (g/L) | | | | | Rdt 1 | Rdt 2 |
|---|---|---|---|---|---|---|---|
| | EF | PF | Moléate | M1 | M2 | | |
| A | 14,2 | 12,4 | 100,1 | 29,5 | 9,3 | 3,9 | 10,3 |
| B | 6,9 | 8,3 | - | 15,5 | 5,6 | 35,6 | 14,6 |

En effet, l'élimination des particules est supérieure avec l'échantillon de terre B, mais comme il peut être observé en comparant la concentration des mousses, ceci est principalement dû au partage hydraulique et aux pertes en eau plus importantes. Il semble donc que la nature du sol traité influence de manière significative le rendement de l'opération de flottation.

Avec l'échantillon de terre B, un essai supplémentaire a été réalisé pour vérifier l'effet d'un deuxième ajout d'oléate, suite à l'épuisement des mousses formées par l'oléate suivi par le Glucopon® (Flottation Ref. 6). Il a été observé que le deuxième ajout d'oléate permet de former à nouveau une mousse à particules très concentrée, qui s'élimine rapidement. Cela semble indiquer qu'il reste des matières flottables dans les suspensions. Il convient donc d'optimiser les dosages d'oléate qui permettent d'éliminer rapidement toute la mousse à particules.

Un essai de flottation avec oléate + Glucopon®, sans filtration à 180 µm de la suspension initiale (Flottation Ref. 7) a conduit à des résultats similaires en terme de taille des particules, concentration de l'accepté et de mousses. La flottation de l'échantillon non filtré a un rendement plus faible, probablement dû à la présence d'une fraction beaucoup plus importante de grosses particules non-flottables.

La même chimie (oléate et Glucopon®) a été testée avec l'échantillon de terre C, avec les mêmes concentrations (Flottation Ref. 8) ou en ajoutant des doses croissantes de produits pour les ajouts successifs au premier (Flottation Ref. 9). Si l'on compare le résultat de la première addition de produits à la même situation des essais précédents, on peut remarquer que l'échantillon de terre C donne des mousses (oléate+ Glucopon®) plus concentrées, avec en revanche un rendement similaire à l'échantillon de terre A (Tableau 6 ci-après).

**Tableau 6 : Concentrations des suspensions avant flottation (EF) ; après traitement de flottation (PF) et des mousses (M1, 1°prélèvement après addition de Glucopon®)**

| Ech. | | | | | Rdt 1 |
|---|---|---|---|---|---|
| | EF | PF | Moléate | M1 | |
| A | 14,2 | 12,4 | 100,1 | 29,5 | 96,1 |
| B | 6,9 | 8,3 | - | 15,5 | 64,8 |
| C | 13,238 | 11,628 | 77,683 | 41,4379 | 98,57 |

En rajoutant, dans le même échantillon, la même quantité d'oléate et de Glucopon®, il est possible d'éliminer davantage de particules (rendement d'extraction de 17%).

En revanche, une addition des produits à quantité croissante (1°ajout= dose x; 2°ajout= dose 2x et 3°ajout= dose 3x) permet d'obtenir des mousses encore plus concentrées et une élimination finale de 30% des particules.

Ces résultats suggèrent que la fraction flottable de terres (avec la mise en suspension spécifiée dans la section méthodes) est très importante et qu'une optimisation de la chimie est nécessaire pour un traitement efficace.

Des essais supplémentaires ont été réalisés en changeant la chimie de flottation et en utilisant un tensioactif cationique (TTAB) avec les échantillons de terre C (Flottation Ref. 10 et 11).

La dose à ajouter a été déterminée en identifiant la concentration nécessaire pour avoir floculation-coagulation, ceci a été fait par des mesures de potentiel zêta, couplées à l'observation visuelle.

Les particules de l'échantillon C apparaissant plus chargées négativement que celles de l'échantillon B, et la neutralisation s'observe pour une concentration plus faible de TTAB (Figure 4). De plus, à l'observation visuelle, une floculation avec sédimentation successive est observée bien avant la neutralisation de la charge de surface. Il est donc décidé de fixer la concentration du TTAB à environ 0,1 g/L (soit 0,7% massique par rapport à la terre).

Le premier essai avec l'échantillon de terre C conduit à l'élimination de 83% des particules présentes, alors qu'environ 70% sont éliminés avec l'échantillon de terre A (Tableau 7 ci-après).

**Tableau 7 : Concentrations des suspensions avant flottation (EF) ; après traitement de flottation (PF) et des mousses M1.**

| Ech. | Conc. (g/L) | | | Matière organique Incinérée à 425°C | | | Rdt 1 |
|---|---|---|---|---|---|---|---|
| | EF | PF | M1 | EF | PF | M1 | |
| C | 14,5 | 7,6 | 116,0 | 6,5 | 5,9 | 50,4 | 16,95 |
| A | 11,2 | 7,2 | 164,4 | 5,3 | 4,7 | 36,1 | 31,63 |

Les mesures de potentiel zêta semblent indiquer que les particules non flottées sont celles n'ayant pas interagi avec le tensioactif cationique, alors que, dans les mousses, on retrouve celles dont la charge de surface a été neutralisée par le TTAB (Tableau 8 ci-après).

**Tableau 8 : Valeurs des potentiels zêta.**

| Ech. | Pot. Zêta (mV) | | |
|---|---|---|---|
| | EF | PF | M1 |
| C | -18,5 | -12,3 | -0,7 |
| A | -15,4 | -15,4 | -6,6 |

La différence de comportement entre les deux terres pourrait s'expliquer en considérant que, pour l'échantillon de terre C, l'effet du tensioactif est bien visible aussi sur les tailles, alors que, pour l'échantillon de terre A, pourtant moins chargée, l'effet d'agglomération est très peu visible (bien qu'en comparant les graphiques de distribution on puisse le constater).

Le Tableau 9 ci-après reprend le diamètre moyen arithmétique des tailles des particules en fonction de l'échantillon de terre et en fonction du traitement subi.

**Tableau 9 : Valeurs des tailles des particules.**

| Ech. | Diamètre moy arith (µm) | | | |
|---|---|---|---|---|
| | initiale | EF | PF | M1 |
| C | 5,7 | 32,67 | 7,14 | 21,67 |
| A | 5 | 4,74 | 4,85 | 6,08 |

### 1.4. Résultats sur terres contaminées.

La même chimie a été utilisée avec les trois échantillons de terre A, B et C (flottations Ref. 12, 13 et 14), contaminés par du chlorure de césium.

Les résultats sont résumés dans le Tableau 10 ci-après. Encore une fois, la nature du sol joue un rôle crucial dans le taux d'élimination des particules (entre 4 et 67%). Les rendements d'extraction du césium de 70% (Echantillon A) à 99% (Echantillon C) ont été mesurés.

**Tableau 10 : Flottation des terres contaminées.**

| Ech. | Conc. (g/L) | | | Rdt 1 |
|---|---|---|---|---|
| | EF | PF | M1 | |
| C | 21,71 | 1,399 | 95,97 | 66,49 |
| A | 25,685 | 3,638 | 131,17 | 44,8 |
| B | 21,47 | 3,76 | 114,69 | 4,15 |

### 1.5. Conclusion.

Les exemples donnés ont permis de confirmer la possibilité d'éliminer une fraction variable des colloïdes présents dans une terre contaminée. Le rendement de cette opération dépend du prétraitement de l'échantillon mais surtout de la chimie utilisée pour la flottation : l'utilisation d'un collecteur de type savon d'acide gras (oléate de Ca²⁺) ou tensioactif cationique (TTAB) a conduit à des éliminations modulables entre 4 et 80% des particules.

Par ailleurs, la flottation permet d'éliminer sélectivement la matière colloïdale organique et par conséquent les complexes acide humique-Césium.

Les essais réalisés montrent aussi l'importance de la nature du sol sur le rendement final de flottation, en indiquant la nécessité d'approfondir les caractérisations physico-chimiques des terres à traiter.

La flottation dispose d'un large potentiel en tant que traitement continu, de grande capacité (plusieurs centaines de m³/heure) et réalisé avec des équipements éventuellement mobiles. La mise au point d'une formulation chimique adéquate (collecteur seul ou collecteur + moussant) reste un facteur clé, et peut être optimisée pour chaque sol, en fonction de ses caractéristiques et de la répartition du césium.

### II. Procédé selon l'invention sur pilote en continu.

### II.1. Contexte et objectifs.

Suite aux résultats positifs concernant la flottabilité d'échantillons de terre en vue de la décontamination des sols pollués, la faisabilité à l'échelle pilote, avec procédé en continu a été testée. Il a été également convenu de tester, lors des essais sur l'installation pilote, l'impact du collecteur et des paramètres du procédé de flottation (débit gaz, hauteur de mousse) sur le rendement du traitement.

### 11.2. Matériel et Méthodes.

### A. Caractérisation de la matière première.

La terre pour les essais a été achetée chez un horticulteur de la région grenobloise, afin d'avoir une composition similaire à celle d'un des échantillons étudiés au préalable au laboratoire (Echantillon C).

La terre a été mise en suspension, selon la méthode de l'exemple I, soit agitation mécanique modérée, concentration à 40 g/L. Les caractéristiques physico-chimiques de la suspension (taille et charge de surface), susceptibles d'affecter la flottation, ont été déterminées, respectivement par analyse d'image (Sysmex FPIA-3000 Malvern) et par mesure de potentiel d'écoulement (SPZ, Mutek).

### B. Flottation Laboratoire.

Des pré-essais de laboratoire ont été réalisés afin de comparer avec l'étude de l'exemple I et de sélectionner les dosages adéquats de collecteurs. La méthode suivie pour la préparation des échantillons, leurs caractérisation et flottation, a été celle établie lors de l'étude précédente, soit : préparation de la suspension avec un appareil Lhomargy (3000 rpm pendant 5 min, à 146 g/L), tamisage 2 mm et 180 µm ; flottation avec cellule à air dispersé Voith, en batch sur un volume de 22 L de suspension à 20 g/L à température ambiante.

### C. Pilote.

*Mise en suspension* : Pulpeur Helico, mélangeur avec rotor monobloc en acier inoxydable, qui assure la circulation de la matière à la plus grande consistance possible. La mise en suspension a été réalisée à environ 570 g_{sec}/L lors de l'essai de validation, il a été ensuite possible de monter à presque 2,2 kg_{sec}/L, lors de l'essai suivant (concentration massique de l'ordre de 70%).

*Pré-classage (HeliPoire)* : Après le pulpeur, une première étape d'élimination des contaminants les plus grossiers est réalisée, grâce à un appareil de classage grossier du type poire de vidange, qui comporte à l'intérieur une grille de séparation (trous de 6 mm), devant lequel se trouve un rotor ayant pour but d'empêcher que les contaminants ne viennent obstruer la grille.

*Hydrocyclone HD* : Afin d'éliminer les particules de densité et taille supérieures à celles qui pourraient être flottées, la suspension est amenée dans un hydrocyclone, qui sépare les deux phases sous l'effet d'un écoulement tourbillonnaire générant une accélération centrifuge.

*Classeur* : Après l'hydrocyclone, la suspension passe dans un cuvier qui alimente une étape d'épuration fine, pour séparer les particules de taille plus grande que les fentes d'un panier cylindrique, qui avec le rotor, constitue le classeur. Le rotor a pour objectif d'empêcher la formation d'un matelas qui couvrirait les fentes. Cela est obtenu à l'aide des ailettes tournant à proximité de la surface du tamis. Pour l'essai, un tamis à fentes de 350 µm a été choisi.

*Flottation* : la suspension alimente ensuite 2 cellules de flottation en série, avec une injection d'air par Venturi (recirculation externe de la pâte), 2 injecteurs par cellule, positionnés à 2 hauteurs. L'aspiration de la mousse se fait en réglant la hauteur des aspirateurs reliés à un bac « casse-mousse », en dépression. Débit d'alimentation : 1,4 m³/h, suspension à 40 g_{sec}/L. Les autres paramètres, variables en cours des essais (taux d'air et hauteur des mousses) seront précisés dans la section résultats.

Les échantillons sont collectés à l'entrée de la flottation (ech. EF = entrée flottation), à la sortie (ech. PF = « pâte » flottée, i.e. ayant subi le traitement de flottation) et sur les mousses (M).

Les échantillons prélevés sont caractérisés avec les mêmes mesures que celles utilisées pour caractériser les échantillons de départ (matière sèche, matière organique, taille de particules, potentiel zêta).

Les additifs de flottation utilisés sont l'oléate de sodium et le TTAB.

### 11.3. Résultats.

### A. Caractérisation de la matière première.

Les caractéristiques de la suspension sont résumées dans le Tableau 11 ci-après.

**Tableau 11 : Echantillons pour l'étude de flottation au pilote et pour comparaison avec l'Echantillon C de l'exemple I (* : 22,2 µS/cm et ** : 300 µS/cm).**

| | Ech. Pilote (couche superficielle) | Ech. C |
|---|---|---|
| Matière sèche (%) | 83,68 | 70,5 |
| Matière organique (incinérée à 425°C) | 9,13% | 4,7% |
| Pré-traitement au tamis 1,2 mm | 9,35% | non |
| Mise en suspension avec Lhomargy | 350 g/L | 350 g/L |
| Pré-traitement au tamis 180 µm particules > 180 µm | 21,10% | 15,8% |
| pH (suspension à 650 g/L) | 8,45 | 7,2 |
| Potentiel Zeta (mV)* | -2,4 | |
| Potentiel Zeta (mV)** | -18,3 | -19,2 |
| Taille (µm) (moy arith) | 6,476 | 5,9 |
| Taille (µm) (moy pond surf) | 20,477 | 27,9 |

La terre reçue pour les essais sur l'installation pilote présente des caractéristiques très proches de celle flottée précédemment au laboratoire, excepté par le taux de matière organique, qui est supérieur (compatible avec l'exploitation agricole de cette terre).

Le pH après mise en suspension dans l'eau du réseau d'eau potable, se situe autour de 8.

Pour la fraction flottable, la taille moyenne (diamètre) est donnée à titre indicatif, les échantillons étant très hétérogènes, comme vérifié par mesure de la distribution de taille de chaque échantillon pré-tamisé à 180 µm avec l'appareil FPIA.

L'échantillon étudié présente des caractéristiques qui le rendent flottable, selon les connaissances acquises et selon l'étude préliminaire au laboratoire.

En considérant les résultats de l'exemple I, les tailles moyennes des particules de la terre et leur charge de surface, les essais sont effectués avec un collecteur traditionnel en désencrage (oléate de calcium) et avec un tensioactif cationique.

Afin d'identifier la concentration nécessaire de tensioactif pour avoir floculation-coagulation, des mesures de potentiel zêta, couplées à l'observation visuelle, ont été réalisées. En effet, lors de l'étude précédente, l'observation visuelle avait mis en évidence une floculation avec successive sédimentation, bien avant la neutralisation de la charge de surface. Il est donc nécessaire, afin d'éviter un collectage non sélectif et la réduction de l'efficacité de flottation, de déterminer la concentration du tensioactif pour laquelle l'interaction particules-tensioactif a lieu, sans toutefois donner une floculation trop importante.

Pour cette raison, le potentiel Zêta d'une suspension à 40 g/L a été mesuré en fonction du ratio massique TTAB/substrat. Comme la courbe obtenue est similaire à celle obtenue pour l'Echantillon C, il a été décidé de ne pas dépasser un dosage de tensioactif de 0,01 g/g soit d'environ 0,3 g/L (8,9.10⁻⁴ M). La valeur de c.m.c trouvée dans la littérature est de 3,5.10⁻³ M.

### B. Flottation laboratoire.

Le comportement du système est presque identique à celui observé lors de l'étude précédente avec l'Echantillon C. L'addition du collecteur conduit à la formation d'agrégats qui permettent de stabiliser les mousses. Ces dernières sont très stables et très concentrées. Les taux d'élimination sont aussi similaires : l'oléate donne un taux de 5,6% vs 4% lors des essais précédents, le TTAB conduit à une élimination de 62,5% vs 83% des essais précédents (mais réalisés en présence d'un ratio tensioactif/terre légèrement supérieur).

Il est donc possible de moduler le taux d'élimination des particules selon le type et la concentration de collecteur utilisé (entre 5 et 60% pour ces essais) ainsi que la durée du procédé.

### C. Pilote.

Le premier jour d'essai a permis de valider la faisabilité technique de flottation de terre avec les installations pilotes actuelles. Un tamisage sur tamis 250x250 µm a été choisi pour ce premier essai, en remplacement du passage dans le classeur à fentes, afin de limiter les pertes de matière première et la dilution trop importante.

Par la même occasion, l'effet de l'oléate (NaOl) a été aussi testé.

En fonction des indications obtenues lors de cette première journée, il a été décidé pour la deuxième série, (i) d'augmenter la concentration de mise en suspension, (ii) d'utiliser le classage à fentes de 350 µm ; (iii) de régler les aspirateurs à hauteur maximale lors de la flottation.

Lors de la deuxième journée de fonctionnement (14 mars), le tensioactif cationique TTAB a été testé.

Les faits marquants des deux essais sont récapitulés dans le Tableau 12 ci-après.

**Tableau 12 : Quantités traitées et rendement d'épuration, jour 1 (NaOl) et 2 (TTAB).**

| | Pré-essai (NaOl) | Essai (TTAB) |
|---|---|---|
| Matière sèche (kg) | 50 | 159 |
| Matière organique (incinérée à 425°C) | 11% | 10% |
| Mise en suspension Helico concentration | 559 g/L | 2239 g/L |
| Pré-filtration 6 mm Elimination | 2,4% | 1,2% |
| Hydrocyclone Elimination | 8,8% | 8,1% |
| Classage Fente 350 µm Elimination | 4,9% | 9,2% |
| Elimination avant flottation | 16,1% | 18,5% |

On peut constater que les étapes d'épuration préalables à la flottation conduisent à un taux d'élimination similaire (bien que légèrement inférieur) à celui déterminé au laboratoire avec un tamisage à 180 µm (soit 21%, cf. Tableau 11)

Pour la flottation, le taux d'air a été réglé à 350%, alors que la hauteur des aspirateurs a été ajustée, en fonction de l'épaisseur totale de mousse. L'oléate de sodium (ajouté dans le cuvier d'alimentation de la flottation) précipite sous forme d'oléate de calcium avec les ions Ca²⁺ de l'eau, collecte les particules, qui stabilisent ensuite la mousse.

La charge de surface des particules n'est pas affectée de manière significative par la présence d'oléate, la valeur des particules avant et après addition d'oléate, ainsi que avant et après flottation est identique à celle mesurée lors de la caractérisation des matières premières (-18 mV). Toutefois, il semblerait que les particules plus anioniques aient été collectées de manière plus sélective, car les mesures faites sur les mousses donnent des valeurs de potentiel zêta légèrement supérieures (-23 mV). Ceci est compatible avec des agglomérats particules/oléate de calcium car ce dernier est plus chargé négativement.

L'agglomération des particules induite par l'oléate, qui avait été mise en évidence lors des essais laboratoire (exemple I), est moins visible lors de l'essai pilote : la taille moyenne des particules dans les mousses ne diffère pas de manière significative de celle des particules à l'entrée ou à la sortie. En analysant la distribution de taille, un léger effet d'agglomération peut toutefois être observé.

Etant donné que, lors de l'essai avec l'oléate, les flux (entrée, sortie et mousses) ont été recirculés et qu'une partie des mousses a été évacuée, il est possible de penser à une rapide déconcentration en oléate, des essais en continu pourraient confirmer cette hypothèse.

En ce qui concerne le rendement de l'opération de flottation, le taux d'élimination varie entre 6 et 20%. Cet essai a mis en évidence la nécessité d'un système qui permette un vieillissement des mousses. En effet, en coupant l'aspiration et en prélevant manuellement les mousses qui avaient pu freiner, il a été possible de mesurer une concentration supérieure, soit 118 g/L pour la mouse de la première cellule et 88 g/L pour celle de la deuxième.

Pour confirmer cette conclusion, une partie de l'alimentation (∼200 L) a été prélevée et utilisée pour une flottation sur la cellule de flottation colonne, en continu. En plus du design de la cellule, celle-ci se différencie par le système d'aspiration, sur toute la section de la colonne et avec une hauteur modulable. Cette différence a permis d'obtenir des mousses à 83 g/L.

Une autre conclusion intéressante de l'essai est que les mousses sont enrichies en matière organique, ce qui est cohérent avec une élimination sélective des complexes argilo-humiques. Cette observation avait déjà été faite lors de l'étude précédente au laboratoire (exemple I) et avait conduit à conclure que la flottation permettrait d'éliminer sélectivement la matière colloïdale organique et par conséquent les éventuels complexes acide humique-Cs.

### D. Flottation avec TTAB.

Ce tensioactif cationique a été rajouté avec une pompe doseuse avant une des pompes d'alimentation de la flottation, ce qui détermine un temps de contact tensioactif/terre de plusieurs secondes.

Le cisaillement dans les pompes et la zone de forte turbulence lors de l'injection d'air assurent le mélange et l'adsorption de tensioactif sur les particules de terre. Le système initial (hauteur maximale des aspirateurs; taux d'air 350%; concentration 0,1 g/L) a été à l'origine d'un moussage trop important. Pour pallier cet inconvénient, le taux d'air a été réduit, ainsi que la concentration du tensioactif.

La mousse formée en présence du TTAB est très différente de celle formée en présence d'oléate : elle semble être composée par des bulles très fines, avec une teneur en eau importante et un drainage du liquide extrêmement lent. Il semblerait que, dans ce cas, la stabilisation par particules se rajoute à l'effet stabilisant du tensioactif, en accentuant fortement la tendance de celui-ci à ralentir le drainage de la mousse et à augmenter la teneur en eau de cette dernière.

Dans la plage de concentrations testée (0,1 et 0,05 g/L), le tensioactif interagit avec les particules, en diminuant légèrement leur charge de surface, sans toutefois arriver à la neutralisation qui entrainerait une sélectivité nulle du procédé.

En diminuant la concentration de tensioactif, aucun effet n'est visible sur la valeur de potentiel zêta de l'entrée (toutefois il faut rappeler que le potentiel zêta est un paramètre global qui moyenne l'état de la charge de chaque particule), mais il peut être observé que les particules collectées ont tendance à être plus chargées négativement, soit la valeur de potentiel zêta est plus proche de leur charge initiale (-18 mV).

En dépit de ces faibles variations sur la valeur absolue du potentiel zêta, l'effet sur l'agglomération est important, comme il peut être déduit des mesures de taille. En effet, il est observé que l'addition de tensioactif induit l'agglomération des particules, car le diamètre moyen (pondéré en surface) passe de 15-20 µm (avant TTAB) à 50-60 µm (après TTAB). La diminution de concentration de tensioactif induit une réduction de la taille (35-40 µm). Dans tous les cas, les particules qui ont flotté et qui se retrouvent dans les mousses ont une taille inférieure.

Les résultats obtenus, en termes d'élimination, sont récapitulés dans le Tableau 13 ci-après.

**Tableau 13 : Résultat de la flottation avec TTAB, Elimination = MM/(MS + MM) avec MM = Masse Mousses et MS = Masse Sortie**

| | Taux d'air | [TTAB] (g/L) | Elimination (%) |
|---|---|---|---|
| Essai 0 | 350 | 0,1 | Trop de mousse/ débordement |
| Essai 1 | 250 | 0,1 | 21,0 |
| Essai 2 | 100 | 0,1 | 8,5 |
| Essai 3 | 100 | 0,05 | 2,7 |

A nouveau en variant le taux d'air et la concentration en collecteur, il est possible de faire varier le taux d'élimination, en descendant jusqu'à 2%.

Comme déjà observé avec l'oléate, la flottation semble éliminer sélectivement la matière colloïdale organique puisqu'un enrichissement en matières organiques de la mousse est obtenu.

### 11.4. Conclusions.

Cette étude a permis de valider la flottation de terre en continu à l'échelle pilote, sur une quantité de terre d'environ 250 kg.

Il a été possible d'utiliser les équipements existants pour l'épuration et pour la flottation, sans modification majeure et avec des résultats très proches de ceux obtenus précédemment au laboratoire.

Il a été confirmé que ce traitement permet d'éliminer une fraction variable des colloïdes présents dans une terre, et principalement la matière colloïdale organique.

Le rendement de cette opération peut être ajusté en variant (i) le type et la concentration du collecteur, (ii) les paramètres du procédé (taux d'air, hauteur aspirateurs...).

Lors des essais réalisés, le taux d'élimination a varié entre 2 et 20%.

L'essai a aussi mis en évidence la nécessité d'un système adéquat pour contrôler le vieillissement des mousses, ce qui, avec d'autres considérations, suggère que le design le plus adéquat pour une cellule de flottation de terre serait une cellule colonne avec aspiration sur toute la section et à épaisseur de mousse variable.

### RÉFÉRENCES

**[1]** Guide méthodologique de gestion des sites potentiellement pollués par des substances radioactives IRSN, 2010
**[2]** Poinssot C, Baeyens B et Bradbury MH (1999). Experimental and modelling studies of caesium sorption on illite. Geochim Cosmochim Ac, 63(19-20): 3217-3227
**[3]** Rigol A, Vidal M et Rauret G (2002). An overview of the effect of organic matter on soil radiocaesium interaction: implications in root uptake. J Environ Radioactiv, 58(2-3): 191-216
**[4]** Demande de brevet JP 2002 248459 au nom de Dowa Mining Co Ltd, publié le 3 septembre 2002
**[5]** Brevet US 5,303,871 au nom de Biotrol Inc., publié le 19 avril 1994.

## Revendications

1. Procédé pour traiter une terre contaminée par au moins un radionucléide comprenant au moins une étape de séparation dudit radionucléide par mousse de flottation à air dispersé produite en injectant des bulles d'air dans une suspension comprenant ladite terre et au moins un collecteur.

2. Procédé selon la revendication 1, **caractérisé en ce que** ledit radionucléide est dans le groupe constitué par le tritium ³H ; le carbone ¹⁴C ; le strontium ⁹⁰Sr ; l'yttrium ⁹⁰Y; le césium ¹³⁷Cs ; le baryum ^{137m}Ba ; l'américium ²⁴¹Am ; un radionucléide de la famille du thorium 232 ou un radionucléide de la famille de l'uranium 238.

3. Procédé selon la revendication 1 ou 2, **caractérisé en ce que** ledit radionucléide est le césium ¹³⁷Cs.

4. Procédé selon l'une quelconque des revendications 1 à 3, **caractérisé en ce que** ledit procédé est mis en oeuvre dans une colonne de flottation ou une cellule de flottation.

5. Procédé selon l'une quelconque des revendications 1 à 4, ledit procédé comprenant les étapes consistant à :
a) injecter des bulles d'air dans une suspension comprenant ladite terre et au moins un collecteur, moyennant quoi une mousse est produite ;
b) séparer au moins une partie de ladite mousse du reste de la suspension.

6. Procédé selon la revendication 5, **caractérisé en ce que** ladite suspension comprend :
- de 2 à 40% en poids et notamment de 10 à 30% en poids de terre à traiter par rapport au poids total de la suspension ;
- de 0,005 à 5% en poids et notamment de 0,01 à 2% en poids d'au moins un collecteur par rapport au poids total de la suspension ; et
- de l'eau.

7. Procédé selon la revendication 6, **caractérisé en ce que** ledit collecteur est choisi parmi un acide gras, un sel d'acide gras et un agent tensioactif cationique.

8. Procédé selon la revendication 6 ou 7, **caractérisé en ce que** ledit collecteur est un sel d'acide gras et notamment l'oléate de sodium.

9. Procédé selon la revendication 6 ou 7, **caractérisé en ce que** ledit collecteur est le bromure de tétradécyltriméthyle ammonium (TTAB).

10. Procédé selon l'une quelconque des revendications 6 à 9, **caractérisé en ce que** ladite suspension comprend, en plus dudit collecteur, au moins un agent tensioactif moussant.

11. Procédé selon la revendication 10, **caractérisé en ce que** ledit agent tensioactif moussant est choisi parmi les polyalkylglucosides, les sulfobétaïnes, les alcools éthoxylés et les oxydes d'amines.

12. Procédé selon l'une quelconque des revendications précédentes, **caractérisé en ce que** ladite terre contaminée par au moins un radionucléide est excavée ou pompée.

13. Procédé selon l'une quelconque des revendications précédentes, **caractérisé en ce que** ladite terre contaminée par au moins un radionucléide est soumise à une étape préalable de traitement de façon à en éliminer les composants minéraux et/ou organiques présentant un diamètre supérieur à 300 µm.

14. Procédé selon l'une quelconque des revendications précédentes, **caractérisé en ce que**, pour une colonne (ou une cellule) de flottation présentant une hauteur comprise entre 1 m et 8 m, la hauteur de mousse produite lors de l'étape (a) est comprise entre 30 cm et 600 cm, notamment entre 80 cm et 400 cm.

15. Procédé selon l'une quelconque des revendications précédentes, **caractérisé en ce que**, lors de l'étape (b), la mousse enrichie en radionucléides au sommet de la colonne (ou de la cellule) est séparée du reste de la suspension par aspiration ou par débordement.

16. Mousse de flottation obtenue, par mise en oeuvre d'un procédé selon l'une quelconque des revendications précédentes, à partir d'une suspension de terre comprenant :
- de 2 à 40% en poids et notamment de 10 à 30% en poids de terre à traiter par rapport au poids total de la suspension ;
- de 0,005 à 5% en poids et notamment de 0,01 à 2% en poids d'au moins un collecteur tel que défini à l'une quelconque des revendications 6 à 9, par rapport au poids total de la suspension ; et
- de l'eau.

17. Mousse de flottation selon la revendication 16, **caractérisée en ce que** ladite suspension comprend au moins un agent tensioactif moussant tel que défini à la revendication 10 ou 11, en plus du collecteur.

## Patentansprüche

1. Verfahren zur Behandlung eines Erdbodens, der mit wenigstens einem Radionukleid kontaminiert ist, umfassend wenigstens einen Schritt der Separation des Radionukleids durch einen Flottationsschaum mit dispergierter Luft, der durch Injizieren von Luftblasen in eine Suspension hergestellt ist, die den Erdboden und wenigstens einen Kollektor umfasst.

2. Verfahren nach Anspruch 1, **dadurch gekennzeichnet, dass** das Radionukleid aus der Gruppe ist, gebildet durch Tritium ³H, Kohlenstoff ¹⁴C, Strontium ⁹⁰Sr, Yttrium ⁹⁰Y, Cäsium ¹³⁷Cs, Barium ^{137m}Ba, Americium ²⁴¹ Am, ein Radionukleid der Familie von Thorium 232 oder ein Radionukleid der Familie von Uran 238.

3. Verfahren nach Anspruch 1 oder 2, **dadurch gekennzeichnet, dass** das Radionukleid Cäsium ¹³⁷Cs ist.

4. Verfahren nach einem der Ansprüche 1 bis 3, **dadurch gekennzeichnet, dass** das Verfahren in einer Flottationssäule oder einer Flottationszelle durchgeführt wird.

5. Verfahren nach einem der Ansprüche 1 bis 4, wobei das Verfahren die folgenden Schritte umfasst:
a) Injizieren von Luftblasen in eine Suspension, die den Erdboden und wenigstens einen Kollektor umfasst, wodurch ein Schaum hergestellt wird;
b) Separieren wenigstens eines Teils des Schaums vom Rest der Suspension.

6. Verfahren nach Anspruch 5, **dadurch gekennzeichnet, dass** die Suspension umfasst:
- von 2 bis 40 Gew.%, und insbesondere von 10 bis 30 Gew.%, von zu behandelndem Erdboden, bezogen auf das Gesamtgewicht der Suspension;
- von 0,005 bis 5 Gew.%, und insbesondere von 0,01 bis 2 Gew.%, von wenigstens einem Kollektor, bezogen auf das Gesamtgewicht der Suspension; und
- Wasser.

7. Verfahren nach Anspruch 6, **dadurch gekennzeichnet, dass** der Kollektor ausgewählt ist aus einer Fettsäure, einem Fettsäuresalz und einem kationischen Tensid.

8. Verfahren nach Anspruch 6 oder 7, **dadurch gekennzeichnet, dass** der Kollektor ein Fettsäuresalz ist, und insbesondere Natriumoleat.

9. Verfahren nach Anspruch 6 oder 7, **dadurch gekennzeichnet, dass** der Kollektor Tetradecyltrimethyl-Ammonium-Bromid (TTAB) ist.

10. Verfahren nach einem der Ansprüche 6 bis 9, **dadurch gekennzeichnet, dass** die Suspension zusätzlich zu dem Kollektor wenigstens ein Schaumtensid enthält.

11. Verfahren nach Anspruch 10, **dadurch gekennzeichnet, dass** das Schaumtensid ausgewählt ist aus den Polyalkylglucosiden, den Sulfobetainen, den ethoxylierten Alkoholen und den Aminoxiden.

12. Verfahren nach einem der vorhergehenden Ansprüche, **dadurch gekennzeichnet, dass** der Erdboden, der mit wenigstens einem Radionukleid kontaminiert ist, ausgehoben oder ausgepumpt ist.

13. Verfahren nach einem der vorhergehenden Ansprüche, **dadurch gekennzeichnet, dass** der Erdboden, der mit wenigstens einem Radionukleid kontaminiert ist, einem vorhergehenden Schritt der Behandlung derart unterzogen wird, dass aus ihm die mineralischen und/oder organischen Komponenten entfernt werden, die einen Durchmesser größer als 300 µm aufweisen.

14. Verfahren nach einem der vorhergehenden Ansprüche, **dadurch gekennzeichnet, dass** für eine Flottationssäule (oder eine -Zelle), die eine Höhe zwischen 1 m und 8 m aufweist, die Höhe des im Schritt (a) hergestellten Schaums zwischen 30 cm und 600 cm enthalten ist, insbesondere zwischen 80 cm und 400 cm.

15. Verfahren nach einem der vorhergehenden Ansprüche, **dadurch gekennzeichnet, dass** während des Schritts (b) der mit Radionukleiden angereicherte Schaum an der Spitze der Säule (oder der Zelle) vom Rest der Suspension durch Absaugen oder durch Überlauf separiert wird.

16. Flottationsschaum, der durch Durchführung eines Verfahrens nach einem der vorhergehenden Ansprüche ausgehend von einer Suspension eines Erdbodens erhältlich ist, umfassend:
- von 2 bis 40 Gew.%, und insbesondere von 10 bis 30 Gew.%, von zu behandelndem Erdboden, bezogen auf das Gesamtgewicht der Suspension;
- von 0,005 bis 5 Gew.%, und insbesondere von 0,01 bis 2 Gew.%, von wenigstens einem Kollektor wie in einem der Ansprüche 6 bis 9 definiert, bezogen auf das Gesamtgewicht der Suspension; und
- Wasser.

17. Flottationsschaum nach Anspruch 16, **dadurch gekennzeichnet, dass** die Suspension wenigstens ein Schaumtensid wie in Anspruch 10 oder 11 definiert zusätzlich zu dem Kollektor umfasst.

## Claims

1. Process for treating a contaminated earth by at least one radionuclide comprising at least one step of separating said radionuclide by dispersed air flotation foam produced by blowing air bubbles in a suspension comprising said earth and at least one collector.

2. Process according to claim 1, **characterised in that** said radionuclide is selected from the group consisting of tritium ³H; carbon ¹⁴C; strontium ⁹⁰Sr; yttrium ⁹⁰Y; cesium ¹³⁷Cs; barium ^{137m}Ba ; americium ²⁴¹Am; a radionuclide from the thorium 232 family and a radionuclide from the uranium 238 family.

3. Process according to claim 1 or 2, **characterised in that** said radionuclide is cesium ¹³⁷Cs.

4. Process according to any of claims 1 to 3, **characterised in that** said process is implemented in a flotation column or a flotation cell.

5. Process according to any of claims 1 to 4, said process comprising the steps of:
a) injecting air bubbles into a suspension comprising said earth and at least one collector, whereby a foam is produced;
b) separating at least one part of said foam from the rest of the suspension.

6. Process according to claim 5, **characterised in that** said suspension comprises:
- 2-40% by weight and in particular 10-30% by weight of earth to be treated based on the total weight of the suspension;
- 0.005-5% by weight and in particular 0.01-2% by weight of at least one collector based on the total weight of the suspension; and
- water.

7. Process according to claim 6, **characterised in that** said collector is selected from a fatty acid, a fatty acid salt and a cationic surfactant.

8. Process according to claim 6 or 7, **characterised in that** said collector is a fatty acid salt and, in particular, sodium oleate.

9. Process according to claim 6 or 7, **characterised in that** said collector is tetradecyltrimethylammonium bromide (TTAB).

10. Process according to any of claims 6 to 9, **characterised in that** said suspension comprises, in addition to said collector, at least one foaming surfactant.

11. Process according to claim 10, **characterised in that** said foaming surfactant is selected from polyalkylglycosides, sulfobetaines, ethoxylated alcohols and amine oxides.

12. Process according to any of the preceding claims, **characterised in that** said earth contaminated by at least one radionuclide is excavated or pumped.

13. Process according to any of the preceding claims, **characterised in that** said earth contaminated by at least one radionuclide is subjected to a prior treatment step so as to remove therefrom the mineral or organic components having a diameter higher than 300 µm.

14. Process according to any of the preceding claims, **characterised in that**, for a flotation column (or cell) having a height between 1 m and 8 m, the height of foam produced in step (a) is between 30 cm and 600 cm, in particular, between 80 cm and 400 cm.

15. Process according to any of the preceding claims, **characterised in that**, in step (b), the radionuclide enriched foam at the top of the column (or the cell) is separated from the rest of the suspension by suction or overflow.

16. Flotation foam obtained by implementing a process according to any of the preceding claims, from an earth suspension comprising:
- 2-40% by weight and in particular 10-30% by weight of earth to be treated based on the total weight of the suspension;
- 0.005-5% by weight and in particular 0,01 to 2% by weight of at least one collector such as defined in any of claims 6 to 9, based on the total weight of the suspension; and
- water.

17. Flotation foam according to claim 16, **characterised in that** said suspension comprises at least one foaming surfactant such as defined in claim 10 or 11, in addition to the collector.
